# EUROPÄISCHE PATENTSCHRIFT

(11) **EP 2 758 219 B1**
(45) Veröffentlichungstag und Bekanntmachung des Hinweises auf die Patenterteilung: **28.02.2018**
(21) Anmeldenummer: 12761604.3
(22) Anmeldetag: 17.09.2012
(51) Int. Cl.: B29C 33/02, B29C 35/02, B29C 70/42

(54) **HERSTELLUNG EINES ROTORBLATTES EINER WINDENERGIEANLAGE MIT BEIDSEITIGER HEIZUNG**
PRODUCTION OF A ROTOR BLADE OF A WIND TURBINE BY MEANS OF HEATING ON BOTH SIDES
FABRICATION D'UNE PALE DE ROTOR D'ÉOLIENNE AVEC CHAUFFAGE DES DEUX CÔTÉS

(30) Priorität: 21.09.2011 DE 102011053817
(43) Veröffentlichungstag der Anmeldung: 30.07.2014
(73) Patentinhaber: Senvion GmbH, 22297 Hamburg (DE)
(72) Erfinder: BENDEL Urs, 24787 Fockbek (DE)
(74) Vertreter: Groth, Wieland
(86) Internationale Anmeldenummer: PCT/EP2012/068234
(87) Internationale Veröffentlichungsnummer: WO 2013/041481

(56) Entgegenhaltungen:
- EP-A1- 2 213 445
- WO-A1-2011/029274
- DE-A1-102004 025 704
- GB-A- 2 241 194
- LEBRUN G ET AL: "EXPERIMENTAL INVESTIGATION OF RESIN TEMPERATURE AND PRESSURE DURINGFILLING AND CURING IN A FLAT STEEL RTM MOULD", COMPOSITES, IPC BUSINESS PRESS LTD. HAYWARDS HEATH, GB, Bd. 27A, Nr. 5, 1. Mai 1996 (1996-05-01), Seiten 347-356, XP000587331, ISSN: 0010-4361

## Beschreibung

Die Erfindung betrifft ein Verfahren zur Herstellung einer faserverstärkten Komponente gemäß dem Oberbegriff des Anspruchs 1 sowie eine Herstellungsform zur Durchführung eines Verfahrens zur Herstellung einer faserverstärkten Komponente eines Rotorblattes einer Windenergieanlage gemäß dem Oberbegriff des Anspruchs 7.

Verfahren zur Herstellung von Bauteilen eines Rotorblattes einer Windenergieanlage sind im Stand der Technik hinlänglich bekannt.

Rotorblätter von Windenergieanlagen sind üblicherweise aus zwei Halbschalen gebildet, wobei die Halbschalen innenseitig in Längsrichtung angeordnete Gurte aufweisen, die innenseitig auf die Halbschalen geklebt sind oder einander gegenüberliegen. Zwischen den Gurten sind Stege vorgesehen, die mit den Gurten an ihren Stegfüßen fest verbunden sind, sodass die Gurte und die Stege im Querschnitt senkrecht zur Längsrichtung des Rotorblattes in etwa ein T-Profil ausbilden können.

Die sehr leichten Schalen der Rotorblätter weisen nur eine geringe Beugesteifigkeit auf und sind durch die angeklebten oder anlaminierten Gurte verstärkt. Die in Schlagrichtung senkrecht zur Umlaufebene auftretenden Biegekräfte entstehen insbesondere durch die Windbelastung. Im Bereich der Rotorblattspitze können Nebengurte anstatt des Hauptgurtes oder zusätzlich vorgesehen sein. Die Biegesteifigkeit des Rotorblattes ist wesentlich, um ein Anschlagen des Rotorblattes an den Turm während des Betriebs zu verhindern und dafür, dass allgemein die Kraftübertragung von der Windgeschwindigkeit in eine Rotorbewegung möglichst verlustfrei funktioniert.

Üblicherweise sind die Rotorblätter, Gurte und Stege glasfaserverstärkt oder kohlefaserverstärkt, wobei die einzelnen Bauteile, wie die Gurte und Rotorblatthalbschalen als auch die Stege, zunächst getrennt voneinander im Laminierverfahren hergestellt werden. Danach werden die Bauteile aneinander laminiert oder miteinander verklebt. In Laminierverfahren werden mehrere Schichten von trockenem faserhaltigem Halbzeug aufeinander gelegt und ggf. zusätzlich mit vorimprägnierten faserhaltigen Prepregs versehen. Um dieses mehrlagige faserhaltige Halbzeug fest ineinander zu verbinden, wird ein Harzsystem in das faserhaltige Halbzeug eingebracht. Üblicherweise werden dazu Infusionstechniken verwendet.

In der EP 2 213 445 A1 ist ein Verfahren zur Herstellung und Aushärtung von Faserverbundwerkstoffen offenbart, bei dem zwei Formhalbschalen jeweils beheizt werden, um den Aushärtevorgang des harzgetränkten Faserverbundwerkstoffes zu verbessern.

In der GB 2 241 194 A ist ein Verfahren zur Herstellung von Faserverbundwerkstoffen bekannt, bei dem eine heizbare Formhalbschale zur Verfügung gestellt wird, und auf der der Formhalbschale gegenüberliegenden Seite des Faserverbundwerkstoffes wird ein von dem Faserverbundwerkstoff beabstandetes weiteres Heizmittel in Form einer UV-Lampe oder eines Heizgebläses zur Verfügung gestellt, damit der über dem Faserverbundwerkstoff angeordnete Vakuumschutzfilm nicht beschädigt wird.

Beispielsweise ist aus der WO 2007/038930 A ein Verfahren zur Herstellung eines faserverstärkten Produktes unter Verwendung des Harzinfusionsverfahrens RTM (Resin Transfer Moulding) bekannt.

Des Weiteren ist aus der DE 100 13 409 C1 ein Verfahren zur Herstellung von faserverstärkten Kunststoffbauteilen aus trockenem faserhaltigem Halbzeug bekannt, wobei ein Harzsystem mittels des Injektionsverfahrens in das Halbzeug eingebracht wird.

Die bekannten Infusionsverfahren haben unter anderem den Nachteil, dass die verwendeten Harzsysteme in einer starken exothermen Reaktion reagieren, nachdem sie infundiert wurden. Harzsysteme weisen üblicherweise eine Harzkomponente und einen Härter auf, die während des Infusionsverfahrens miteinander vermischen und exotherm reagieren. Die exotherme Reaktion kann durchaus 1 bis 2 Stunden oder noch mehr Zeit in Anspruch nehmen. Innerhalb dieser Zeit bildet sich ein exothermer Peak aus. Das ist die während der exothermen Reaktion auftretende Höchsttemperatur. Damit die Harzsysteme vollständig aushärten können, wird ihnen, nachdem sie den exothermen Peak durchlaufen haben, zusätzlich extern Wärme zugeführt, um sie auf einer Prozesstemperatur zu halten. Zum Aushärten benötigen diese Harzsysteme jedoch nur geringe Prozesstemperaturen von teilweise weniger als 60° C. Es können auch Epoxydharzsysteme mit Wärme nachgehärtet werden, wobei eine Prozesstemperatur von 50 - 60 °C über ca. zehn Stunden zur vollständigen Härtung nötig ist. Nachteilig sind die dabei auch langen Prozesszeiten.

Es ist Aufgabe der Erfindung, ein Verfahren und eine Herstellungsform zur Verfügung zu stellen, das bzw. die sich besonders zur Verwendung von Harzsystemen mit niedriger Exothermieentwicklung bei der Herstellung von Bauteilen einer Windenergieanlage eignen.

Diese Aufgabe wird im ersten Aspekt durch ein Verfahren mit den Merkmalen des Anspruchs 1 gelöst. Vorteilhafte Weiterbildungen der Erfindung sind Gegenstand der Unteransprüche.

Erfindungsgemäß wird mindestens ein faserhaltiges Halbzeug auf eine Auflagefläche einer Herstellungsform für die zu fertigende Komponente gelegt. Das faserhaltige Halbzeug ist wenigstens bereichsweise bereits mit einem Harzsystem getränkt, wenn es auf die Auflagefläche gelegt wird, oder es wird erst auf der Auflagefläche mit einem Harzsystem getränkt.

Die Begriffe "wenigstens eine" oder "mindestens eine" bedeuten in dieser gesamten Druckschrift: eins, zwei, drei und jede weitere höhere natürliche Zahl.

Unter einem faserhaltigen Halbzeug sind hier insbesondere ein-, zwei- oder mehrschichtige Gelege zu verstehen, wobei voneinander verschiedene Schichten einen unterschiedlichen Aufbau haben können. Das Fasermaterial der Schichten kann aus langen unidirektionalen Fasern (Rovinge), aber auch aus Endlosfasern gebildet sein. Die Gelege können auch Gewebe sein. Die Fasern können karbonhaltig sein oder Glasfasern umfassen. Es ist auch denkbar, dass die Schichten Folien, Fließhilfen o. Ä. umfassen.

Das Halbzeug kann in einer ersten Variante des erfindungsgemäßen Verfahrens bereits harzgetränkt sein. In diesem Fall wird das Halbzeug insbesondere als vorimprägniertes Fasergelege (Prepreg) auf die Auflagefläche der Herstellungsform gelegt. Das harzhaltige Halbzeug kann aber auch als trockenes faserhaltiges Halbzeug auf die Auflagefläche gelegt werden und erst dort mit dem Harzsystem getränkt werden. In der zweiten Variante des erfindungsgemäßen Verfahrens können zum Tränken des Halbzeugs mit dem Harzsystem beispielswiese Vakuuminfusionsverfahren angewendet werden.

Die Erfindung betrifft insbesondere den Aushärtevorgang des harzgetränkten Halbzeugs.

Harzsysteme umfassen die Harzkomponente und einen Härter, die zusammengeführt werden und in einer exothermen Reaktion miteinander reagieren. Dabei wird ein exothermer Peak erreicht und durchlaufen, der je nach verwendeter Harzkomponente und Härter unterschiedlich hoch ausfallen kann und auch in unterschiedlichen Zeitspannen nach dem Reaktionsbeginn auftreten kann.

Erst nachdem der exotherme Peak durchlaufen ist und sich die Reaktion abschwächt, wird dem harzgetränkten Bereich des faserhaltigen Halbzeug zusätzlich Wärme zugeführt, um eine Prozesstemperatur einzustellen, bei der der harzgetränkte Bereich des Halbzeugs besonders stark aushärtet.

Die erfindungsgemäß verwendeten Harzkomponenten können Epoxydvenylesterharze mit Zusätzen von Kupfersalzen oder Kupferkomplexen mit Alkoholen, Ketonen oder Aldehyden umfassen. Des Weiteren sind vorzugsweise Styrol, Inhibitoren und Chelatbildner in der Harzkomponente enthalten. Derartige Harzsysteme sind beispielsweise in der US 6,329,475 B1 offenbart. Sie zeichnen sich durch eine exotherme Reaktion mit einem exothermen Peak vergleichsweise geringer Höhe von etwa 38° C bis 130° C gegenüber 180° C bis 210° C bei herkömmlichen Harzsystemen aus, sie benötigen aber eine erhöhte Prozesstemperatur zum Aushärten von 60° C bis 140° C vorzugsweise etwa 80° C.

Erfindungsgemäß wird dem mit dem Harzsystem getränkten Bereich des faserhaltigen Halbzeugs von wenigstens zwei sich gegenüberliegenden Seiten Wärme zum Aushärten zugeführt.

Durch die Wärmezufuhr von sich gegenüberliegenden Seiten zum harzgetränkten Bereich des faserhaltigen Halbzeug wird vorteilhafterweise eine über den gesamten Bereich gleichmäßigere und über die Aushärtedauer gleichbleibendere Erwärmung des Halbzeugs ermöglicht.

Dadurch ist es nunmehr vorteilhafterweise möglich, auch Harzsysteme zur Laminierung der Komponenten einer Windenergieanlage zu verwenden, die die oben genannten hohen Prozesstemperaturen zum Aushärten benötigen.

Der harzgetränkte Bereich des auf die Auflagefläche gelegten faserhaltigen Halbzeugs wird von dem wenigstens einen ersten Heizelement, das beispielsweise positionsfest, insbesondere integriert an bzw. in der Herstellungsform angeordnet ist, erwärmt und zusätzlich von wenigstens einem weiteren Heizelement erwärmt, das dem Bereich von einer der Auflagefläche abgewandten Seite Wärme zuführt.

Durch die wenigstens beidseitige Wärmezufuhr kann eine vorgegebene Prozesssolltemperatur räumlich und zeitlich innerhalb des Bereiches besonders eng eingehalten werden. Vorzugsweise wird die vorgegebene Prozesssolltemperatur über den gesamten Bereich und während der gesamten Aushärtedauer um nicht mehr als ± 20° C, vorzugsweise ± 10° C, besonders bevorzugt ± 5° C überschritten. Die Prozesssolltemperatur beträgt dabei vorzugsweise zwischen 60° C und 140° C. Unter dem Prozesstemperatursollwert wird hier der Temperaturwert verstanden, bei dem das harzgetränkte faserhaltige Halbzeug optimal aushärtet, wobei durch die gleichbleibende Prozesstemperatur eine optimale Vernetzung des Harzsystems erreicht wird.

Zur Erzeugung einer hinreichenden Stabilität des Bauteils werden für mindestens eine Schicht des mehrlagigen faserhaltigen Halbzeugs gerichtete Langfaserbündel (Rovinge) ausgewählt, die aus dem Bereich der Glas-, Kohle- oder aber Basaltfasern stammen können.

Im zweiten Aspekt wird die Aufgabe durch eine Herstellungsform mit den Merkmalen des Anspruchs 10 erfüllt.

Die erfindungsgemäße Herstellungsform ist zur Durchführung eines der oben genannten Verfahren zur Herstellung einer faserverstärkten Komponente eines Rotorblattes einer Windenergieanlage geeignet. Sie weist eine Auflagefläche für ein harzgetränktes faserhaltiges Halbzeug auf und ein auf einer dem harzgetränkten faserhaltigen Halbzeug abgewandten Seite der Auflagefläche angeordnetes erstes Heizmittel. Das erste Heizmittel erwärmt den harzgetränkten Bereich durch die Auflagefläche hindurch. Erfindungsgemäß ist wenigstens ein weiteres Heizmittel vorgesehen, das entlang der Auflagefläche angeordnet ist, wobei die Auflagefläche zwischen dem ersten Heizmittel und dem wenigstens einen weiteren Heizmittel angeordnet ist.

Durch die beiden das harzgetränkte faserhaltige Halbzeug sandwichenden Heizmittel wird vorteilhafterweise eine zur Durchführung der Verfahren räumlich und zeitlich gleichmäßig hohe Prozesstemperatur bereitgehalten.

Das wenigstens eine weitere Heizmittel ist von der Auflagefläche vorzugsweise beabstandet angeordnet. So kann das harzgetränkte faserhaltige Halbzeug zwischen dem wenigstens einen ersten und dem wenigstens einen weiteren Heizmittel angeordnet sein und vorteilhaft besonders gleichmäßig und von zwei sich gegenüberliegenden Seiten der Wärmeeinwirkung ausgesetzt werden.

Vorzugsweise wird das faserhaltige Halbzeug, nachdem es trocken auf die Auflagefläche aufgelegt ist, mittels einer Infusionseinrichtung mit Hilfe einer Harzzufuhrleitung eines Harzsystems so lange mit dem Harzsystem infundiert, bis das gesamte faserhaltige Halbzeug mit dem Harzsystem durchtränkt ist. Das aus Harzkomponente und Härter bestehende Harzsystem reagiert dann selbstständig in einer vorzugsweise schwach exothermen Reaktion mit einem schwachen exothermen Peak.

Zur vollständigen Aushärtung muss der harzgetränkte Bereich des faserhaltigen Halbzeugs, nachdem der exotherme Peak durchlaufen ist, weiter im gesamten Bereich und während der gesamten Aushärtedauer auf die hohe Prozesstemperatur erhitzt werden. Dazu ist bevorzugt ein Regelsystem vorgesehen, das das harzgetränkte faserhaltige Halbzeug während der Aushärtedauer auf eine Prozesstemperatur zwischen wenigstens 60° C und höchstens 140° C erhitzt, wobei über die gesamte Aushärtedauer einem Unter- oder Überschreiten einer Prozesssolltemperatur um mehr als ± 20° C, vorzugsweise um mehr als ± 10° C, besonders bevorzugt um mehr als ± 5° C durch einen Regelkreis entgegengesteuert wird, indem das erste und/oder wenigstens ein weiteres Heizmittel angesteuert wird und dessen Wärmeabgabe erhöht bzw. verringert wird, wenn Grenzwerte unter- bzw. überschritten werden. Günstigerweise sind dazu im harzgetränkten Bereich des Halbzeugs Temperatursensoren eingelassen, die mit dem Regelkreis eine Datenübertragungsverbindung ausbilden.

Das wenigstens eine weitere Heizmittel ist günstigerweise relativ zur Herstellungsform beweglich, während das wenigstens eine erste Heizmittel gegenüber der Herstellungsform positionsfest ist. Vorteilhafterweise kann das wenigstens eine weitere Heizmittel somit zum bequemen Auflegen des Halbzeugs auf die Auflagefläche zwischenzeitlich entfernt werden.

In einer besonders leicht handhabbaren Variante der Erfindung ist das wenigstens eine erste Heizmittel in Richtung der Erdanziehungskraft unterhalb der Auflagefläche angeordnet und das wenigstens eine weitere Heizmittel beabstandet von und oberhalb der Auflagefläche angeordnet.

Das wenigstens eine weitere Heizmittel ist erfindungsgemäß als eine, gegebenenfalls über die Länge der Auflagefläche mehrteilige Heizdecke ausgebildet. Heizdecken können vorteilhafterweise formschlüssig auf die der Auflagefläche abgewandten Seite des Halbzeugs aufgelegt werden. Dadurch ist eine besonders gleichmäßige Wärmeübertragung möglich.

Die Erfindung wird anhand von fünf Figuren in vier Ausführungsbeispielen beschrieben. Dabei zeigen:
- Fig.1: eine Herstellungsform eines Rotorblattes gemäß dem Stand der Technik im Querschnitt,
- Fig. 2: eine erste erfindungsgemäße Ausführungsform der Herstellungsform mit Heizdecke im Querschnitt,
- Fig. 3: eine zweite erfindungsgemäße Ausführungsform einer Herstellungsform mit wärmeisolierender Folie und Warmluftkanal im Querschnitt,
- Fig. 4: eine dritte Ausführungsform einer Herstellungsform mit Wärmestrahler im Querschnitt und
- Fig. 5: eine vierte Ausführungsform einer Herstellungsform mit und Wärmestrahler sowie wärmeisolierender Folie im Querschnitt.

In den Figuren sind gleiche oder gleichartige Elemente bzw. Bauteile mit denselben Bezugsziffern versehen. Die Zeichnungen sind nicht maßstabsgetreu.

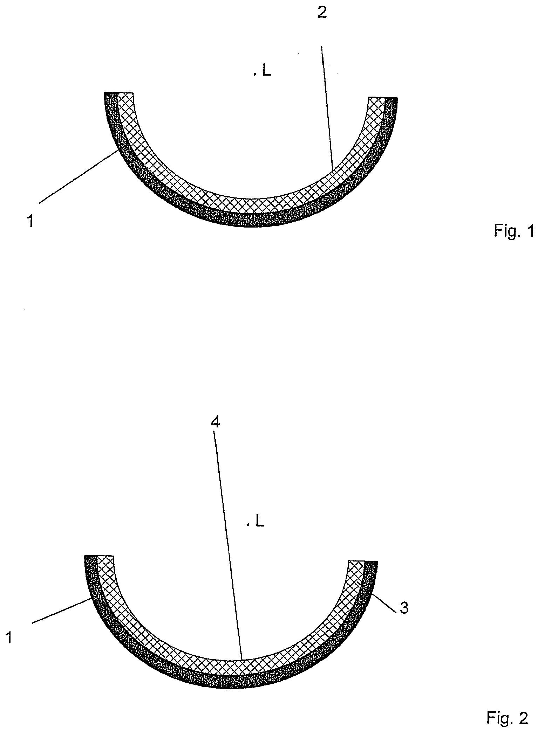

Fig. 1 zeigt schematisch den Querschnitt einer bekannten Herstellungsform 1 für ein Bauteil einer Windenergieanlage. Das Bauteil kann eine Rotorblatthalbschale, ein Gurt, insbesondere ein Hauptgurt, aber auch ein Nebengurt oder ein Steg sein. Eine Längsrichtung L der Herstellungsform 1 verläuft in der Fig.1 senkrecht zur Zeichenebene. Der dargestellte Querschnitt verläuft somit senkrecht zur Längsrichtung L der Herstellungsform 1.

Eine untere Wandung der Herstellungsform 1 ist in Fig. 1 halbbogenförmig, mit über den gesamten Querschnitt gleicher Wandungsstärke ausgebildet, dargestellt. Die Wandungsstärke kann in anderen, nicht dargestellten Ausführungsformen, im Querschnitt variieren

In die Herstellungsform 1 ist ein harzgetränktes faserhaltiges Halbzeug 2 mit ebenfalls über dem in Fig. 1 dargestellten Querschnitt gleicher Dicke eingelegt. Das harzgetränkte faserhaltige Halbzeug 2 liegt auf einer glatten Auflagefläche 3 der Herstellungsform 1 auf. In die Wandung der Herstellungsform 1 sind (nicht eingezeichnete) Heizelemente eingelassen, die die Auflagefläche 3 aus Richtung der Wandung, d. h. von außen erwärmen und damit auch das innen auf die Auflagefläche 3 aufgelegte harzgetränkte faserhaltige Halbzeug 2 durch die Auflagefläche 3 hindurch erwärmen.

Das faserhaltige Halbzeug 2 muss, um der erfindungsgemäßen Behandlung durch beidseitiges gleichmäßiges Erhitzen unterzogen werden zu können, bereits mit dem Harzsystem getränkt sein. Dazu kann ein bereits mit Harz getränktes, faserhaltiges Halbzeug 2 auf die Auflagefläche 3 der Herstellungsform 1 gelegt werden, oder es kann trockenes faserhaltiges Halbzeug 2 auf die Auflagefläche 3 gelegt werden, das dann erst auf der Auflagefläche 3 mit dem Harzsystem infundiert wird.

Dazu werden herkömmliche RIM-Verfahren (Resin Injection Moulding) Verfahren benutzt. Beim RIM Verfahren handelt es sich um eine Art des Vakuuminfusionsverfahrens. Bei Vakuuminfusionsverfahren wird ein Harzsystem durch Vakuumdruck in ein Laminat gesogen. Das Vakuuminfusionsverfahren zeichnet sich üblicherweise dadurch aus, dass das in die Herstellungsform 1 eingelegte trockene faserhaltige Halbzeug 2 formaußenseitig mit einer im Wesentlichen luftdichten Vakuumdichtfolie abgedeckt und deren Ränder an der Herstellungsform 1 abgeklebt werden. In den luftdicht verschlossenen, das faserhaltige Halbzeug 2 beherbergende Innenraum führen Harzzufuhrleitungen über an vorzugsweise zentralen Punkten der Vakuumdichtfolie vorgesehenen Anschüssen. Den Innenraum umgibt eine Vakuumringleitung, an die eine Vakuumpumpe über einen Schlauch angeschlossen ist. Nach Anschalten der Vakuumpumpe bildet sich im Innenraum zwischen der Auflagefläche 3 und der Vakuumdichtfolie ein Unterdruck aus, der sich auch innerhalb des faserhaltigen Halbzeugs 2 ausbreitet. Anschließend wird der Anschluss geöffnet und durch die Harzzufuhrleitung das Harzsystem in das faserverstärkte Halbzeug 2 eingesogen. Dabei wird insbesondere auf Vermeidung von Blasenbildung und gleichmäßiges Verteilen des Harzsystems innerhalb des Halbzeugs 2 geachtet. Wenn das faserverstärkte Halbzeug 2 vollständig mit dem Harzsystem vollgesogen ist, wird die Harzzufuhr unterbrochen und die Vakuumpumpe abgestellt.

Das erfindungsgemäß verwendete Harzsystem besteht aus einer Harzkomponente und einem Härter. Das Harzsystem beginnt den Aushärtungsprozess selbstständig unter Durchlaufen eines geringen exothermen Peaks. Zur weiteren Aushärtung ist eine erhöhte, extern erzeugte Prozesstemperatur erforderlich. Das harzgetränkte faserhaltige Halbzeug 2 muss stärker als herkömmlich erwärmt werden. Ein derartiges Harzsystem ist beispielsweise aus der US 6,329,475 B1 bekannt. Dort wird der Härter als Katalysator bezeichnet. Als Harzkomponente kommt dort ein als Derkane 411-4 oder Derkane 470-30 benanntes Epoxydvenylesterharz, das 4 bzw. 30 Prozent monomeres Styrol enthält, in Frage, die weitere erfindungsgemäße Zusätze von Kupfersalzen oder Kupferkomplexen mit Alkoholen, Ketonen oder Aldehyden umfasst. Des Weiteren sind vorzugsweise Inhibitoren und Chelatbildner in der Harzkomponente enthalten

Zunächst reagiert das hier verwendete infundierte Harzsystem in einer exothermen Reaktion mit einem exothermen Peak bei etwa 40° C bis 120° C. Es liegt damit ein Harzsystem mit niedriger Exothermieentwicklung vor. Der exotherme Peak ist deutlich tiefer als bei herkömmlicherweise ohne die genannten Zusätze verwendeten Epoxydvenylesterharzen, die einen Peak bei ca. 180° C aufweisen.

Die Harzsysteme mit niedriger Exothermieentwicklung können den exothermen Peak bereits nach 30 Minuten erreichen und damit schneller als Harzsysteme mit höherem exothermem Peak.

Damit das Harzsystem vollständig ausgehärtet, muss das mit dem Harzsystem infundierte faserhaltige Halbzeug 2 auf eine Prozesstemperatur erwärmt werden. Die Prozesstemperatur muss über den gesamten infundierten Bereich während der gesamten Aushärtungsdauer gehalten werden. Die Wärmezufuhr muss so stabil sein, dass Schwankungen um höchstens ± 20° C, vorzugsweise ± 10° C, besonders bevorzugt ± 5° C, um eine Prozesssolltemperatur auftreten. Die Prozesssolltemperatur beträgt hier zwischen 60° C und 140° C, vorzugsweise etwa 80° C.

Herstellungsformen, die eine solche, räumlich und zeitlich stabile, erhöhte Prozesstemperatur zur Verfügung stellen können, sind in den Fign. 2, 3, 4 und 5 dargestellt.

Fig. 2 zeigt eine erfindungsgemäße Herstellungsform 1 für Bauteile eines Rotorblatts einer Windenergieanlage, insbesondere des Gurtes einer Windenergieanlage. Gegenüber der Fig.1 ist über das harzgetränkte Halbzeug 2 eine Wärmedecke 4 gelegt. Die Fig. 2 zeigt lediglich eine schematische Darstellung der Herstellungsform 1. Die Herstellungsform 1 ist auch hier, wie schon in Fig. 1, nur exemplarisch halbbogenförmig dargestellt. Die Herstellungsform 1 kann demgegenüber auch eine beinahe ebene und flache Auflagefläche 3 aufweisen, wie sie zur Herstellung eines Hauptgurtes notwendig ist. Es sind auch ebene und flache Auflageflächen 3 zur Herstellung von Stegen denkbar.

Die Herstellungsform 1 weist hier eine im Querschnitt halbbogenförmig ausgebildete Auflagefläche 3 auf; in der Wandung der Herstellunsgform 1 sind auch in der erfindungsgemäßen Ausgestaltungsform (nicht dargestellte) Heizelemente vorgesehen. Dabei kann es sich um Heizstäbe in Form von Drahtheizungen handeln, Luft- oder Flüssigkeitskanäle zum Durchleiten von heißer Luft bzw. Flüssigkeit, aber auch Infrarotheizungen, Mikrowellenheizungen oder andere Ausgestaltungsformen von Heizmitteln sind in der Wandung der Herstellungsform 1 möglich.

Fig. 2 zeigt wie Fig. 1 zunächst ein in die Herstellungsform 1 auf die Auflagefläche 3 aufgelegtes faserhaltiges Halbzeug 2, das bereits mit dem Harzsystem mit niedriger Exothermieentwicklung getränkt ist.

Allerdings muss dieses Harzsystem zum Aushärten auf eine Prozesstemperatur von 60° C bis 140° C vorzugsweise 80° C erwärmt werden, um hinreichend auszuhärten. Um diese erhöhte Prozesstemperatur über den gesamten Bereich des harzgetränkten faserhaltigen Halbzeugs zu erzeugen und auch während der Aushärtedauer zu halten, ist auf der der Auflagefläche 3 abgewandten Seite des fasergetränkten Halbzeugs 2 ein Heizmittel 4 angeordnet. Das Heizmittel 4 weist in Fig. 2 die Form einer Heizdecke 4 auf, die formschlüssig auf das harzgetränkte faserhaltige Halbzeug 2 gelegt ist, und der gesamte auszuhärtende Bereich des harzgetränkten, faserhaltigen Halbzeugs 2 ist forminnenseitig von der Heizdecke 4 überdeckt und formaußenseitig von der Auflagefläche 3 begrenzt.

Durch die gegenüber dem Stand der Technik zusätzliche Anordnung der Heizdecke 4 wird eine gleichmäßigere, höhere und konstantere Prozesstemperatur über den gesamten mit Harz infundierten Bereich des faserhaltigen Halbzeugs 2 erzielt. Die Prozesstemperatur liegt im gesamten Bereich zwischen 60" C und 140° C, vorzugsweise über 80° C. Die Aushärtedauer, d. h. die Zeit, die benötigt wird, um das Harzsystem auszuhärten und die der Zeit entspricht, während der der Bereich auf der Prozesstemperatur gehalten werden muss, beträgt hier eine Stunde, vorzugsweise weniger als eine Stunde.

Üblicherweise weisen die faserhaltigen Halbzeuge 2 ein mehrschichtiges Gelege auf, wobei eine der Schichten Langfaserbündel aufweist, die in Längsrichtung verlaufen (Rovinge). Bei der Infusion des faserhaltigen Halbzeugs 2 wird darauf geachtet, dass das Harzsystem alle Schichten gleichmäßig unter nur geringer Blasenbildung durchtränkt.

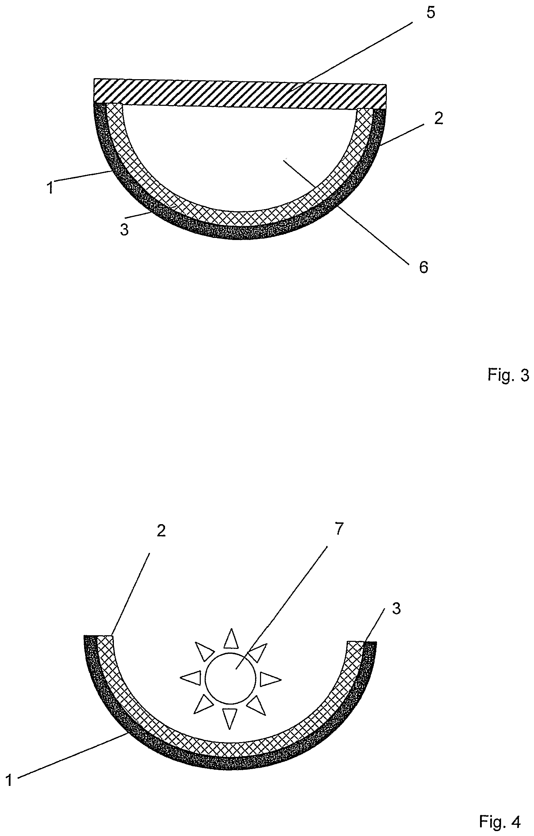

Fig. 3 zeigt eine zweite Ausführungsform der erfindungsgemäßen Herstellungsform 1 für Bauteile eines Rotorblattes einer Windenergieanlage. Dabei ist die Herstellungsform 1 wiederum mit einer Auflagefläche 3 für ein faserhaltiges Halbzeug 2 versehen. Allerdings ist die Herstellungsform 1 bei dieser Ausführungsform der Erfindung forminnenseitig im Wesentlichen luftdicht abgeschlossen, indem eine im Wesentlichen wärmeisolierende Folie 5 über Längskanten der Herstellungsform 1 gelegt wird und luftdicht mit den Längskanten verbunden wird. Statt der wärmeisolierenden Folie kann auch eine wärmeisolierende Platte Haube, Kuppel o. Ä. versendet werden. Aufgrund der zur Innenseite ausgebildeten Krümmung der Herstellungsform 1 entsteht ein Luftkanal 6 zwischen Folie 5 und Halbzeug 2.

Der Luftkanal 6 ist zum Durchströmen von Warm- bzw. Heißluft bestimmt, die auf die Prozesssolltemperatur oder vorzugsweise auf eine geringfügig höhere Temperatur als die gewünschte Prozesssolltemperatur erhitzt ist. Auch in der zweiten Ausführungsform der Erfindung ist in die Wandung der Herstellungsform 1 wenigstens ein erstes Heizmittel eingelassen. Somit kann auch hier das harzgetränkte faserhaltige Halbzeug 2 von zwei sich gegenüberliegenden Seiten und folglich besonders gleichmäßig auf eine Prozesstemperatur von vorzugsweise wenigstens 80° C gebracht werden.

Fig. 4 zeigt eine dritte Ausführungsform der erfindungsgemäßen Herstellungsform 1 für ein Bauteil des Rotorblattes einer Windenergieanlage. Auch hier ist wiederum eine mit Heizelementen versehene Wandung der Herstellungsform 1 mit einer Auflagefläche 3 vorgesehen, auf die bereits ein harzgetränktes faserhaltiges Halbzeug 2 gelegt ist. Auf der der Auflagefläche 3 abgewandten Seite des faserhaltigen Halbzeugs 2 ist ein Heizelement in Form eines Heizstrahlers 7 angeordnet, der das harzgetränkte faserhaltige Halbzeug 2 forminnenseitig mit Wärmestrahlung bestrahlt. Bei dem Heizstrahler 7 kann es sich um einen IR-Strahler, eine Heizung o. Ä. handeln.

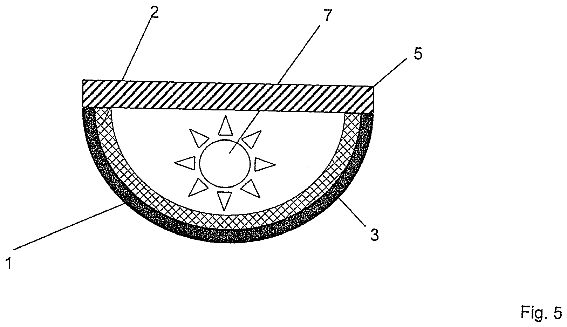

Fig. 5 zeigt eine Weiterbildung der Ausführungsform in Fig. 4. Dort ist der Heizstrahler 7 mit einer wärmeisolierenden Folie 5 überdeckt. Der Heizstrahler 7 ist in einem sich zwischen wärmeisolierender Folie 5 und Auflagefläche 4 ausbildenden Innenraum angeordnet. Die vom Heizstrahler 7 abgestrahlte Wärmestrahlung wird von der wärmeisolierenden Folie 5 reflektiert und dem auf der Auflagefläche 3 aufgelegten, harzhaltigen faserhaltigen Halbzeug 2 wiederum zugeführt.

### Bezugszeichenliste

- 1: Herstellungsform
- 2: Halbzeug
- 3: Auflagefläche
- 4: Heizmittel, Heizdecke
- 5: wärmeisolierende Folie
- 6: Luftkanal
- 7: Heizstrahler

- L: Längsrichtung

## Patentansprüche

1. Verfahren zur Herstellung einer faserverstärkten Komponente eines Rotorblattes einer Windenergieanlage, indem
mindestens ein faserhaltiges Halbzeug (2) auf eine Auflagefläche (3) einer Herstellungsform (1) für die zu fertigende Komponente gelegt wird das faserhaltige Halbzeug (2) wenigstens bereichsweise mit Harz getränkt wird oder bereits mit Harz getränkt ist,
dem mit Harz getränkten Bereich des faserhaltigen Halbzeugs (2) zum Aushärten Wärme zugeführt wird, mittels
wenigstens eines auf einer dem harzgetränkten faserhaltigen Halbzeug (2) abgewandten Seite der Auflagefläche (3) angeordneten ersten Heizmittels,
**dadurch gekennzeichnet, dass** dem mit Harz getränkten Bereich des faserhaltigen Halbzeugs (2) von wenigstens zwei sich gegenüberliegenden Seiten Wärme zum Aushärten zugeführt wird, wenigstens ein weiteres Heizmittel (4, 6, 7) entlang der Auflagefläche (3) angeordnet wird und dadurch, dass die Auflagefläche (3) zwischen dem ersten Heizmittel und dem wenigstens einen weiteren Heizmittel (4, 6, 7) angeordnet wird und
das wenigstens eine weitere Heizmittel als Heizdecke (4) ausgebildet wird, die auf die dem ersten Heizmittel abgewandte Seite des mit dem Harzsystem infundierten faserhaltigen Halbzeugs (2) aufgelegt wird und die Auflagefläche (3) und die wenigstens eine Heizdecke (4) zusammen den harzgetränkten Bereich des faserhaltigen Halbzeugs (2) im Wesentlichen vollständig umschließen

2. Verfahren nach Anspruch 1,
**dadurch gekennzeichnet, dass** ein trockenes faserhaltiges Halbzeug (2) auf die Auflagefläche (3) gelegt wird,
das aufgelegte trockene faserhaltige Halbzeug (2) danach mit einem Harzsystem infundiert wird.

3. Verfahren nach Anspruch 1 oder 2,
**dadurch gekennzeichnet, dass** das harzgetränkte faserhaltige Halbzeug (2) durch die Wärmezufuhr im gesamten Bereich auf eine im Wesentlichen konstante Prozesstemperatur erhitzt wird.

4. Verfahren nach Anspruch 3,
**dadurch gekennzeichnet, dass** die Prozesstemperatur über den gesamten Bereich nicht mehr als ± 20° C, vorzugsweise um nicht mehr als ± 10° C, besonders bevorzugt um nicht mehr als ± 5° C um eine Prozesssolltemperatur schwankt.

5. Verfahren nach einem der vorstehenden Ansprüche,
**dadurch gekennzeichnet, dass** das Harzsystem während des Aushärtens auf eine Prozesstemperatur zwischen wenigstens 60 °C und höchstens 140 °C erhitzt wird und eine Aushärtedauer vorgegeben wird und das Harzsystem im gesamten Bereich während der gesamten Aushärtedauer auf die Prozesstemperatur erhitzt wird.

6. Verfahren nach einem der vorstehenden Ansprüche,
**dadurch gekennzeichnet, dass** eine Harzkomponente des Harzsystems aus der Gruppe der Epoxydharze oder Polyesterharze ausgewählt wird.

7. Herstellungsform zur Durchführung eines Verfahrens zur Herstellung einer faserverstärkten Komponente eines Rotorblattes einer Windenergieanlage mit einer Auflagefläche (3) für ein harzgetränktes faserhaltiges Halbzeug (2) und wenigstens einem auf einer dem harzgetränkten faserhaltigen Halbzeug (2) abgewandten Seite der Auflagefläche (3) angeordneten ersten Heizmittel,
**gekennzeichnet durch** wenigstens ein weiteres Heizmittel (4, 6, 7), das entlang der Auflagefläche (3) angeordnet ist und **dadurch, dass** die Auflagefläche (3) zwischen dem ersten Heizmittel und dem wenigstens einen weiteren Heizmittel (4, 6, 7) angeordnet ist und das wenigstens eine weitere Heizmittel als Heizdecke (4) ausgebildet ist, die auf die dem ersten Heizmittel abgewandte Seite des mit dem Harzsystem infundierten faserhaltigen Halbzeugs (2) auflegbar ist, und **dadurch, dass** die Auflagefläche (3) und die wenigstens eine Heizdecke (4) zusammen den harzgetränkten Bereich des faserhaltigen Halbzeugs (2) im Wesentlichen vollständig umschließen.

8. Herstellungsform nach Anspruch 7,
**gekennzeichnet durch** eine Infusionseinrichtung mit einer Harzzufuhrleitung zur Infusion des faserhaltigen Halbzeugs (2) mit einem Harzsystem zur Erzeugung des harzgetränkten faserhaltigen Halbzeugs (2).

9. Herstellungsform nach Anspruch 7 oder 8,
**dadurch gekennzeichnet, dass** das erste Heizelement positionsstabil zur Herstellungsform (1) vorgesehen ist und das wenigstens eine weitere Heizelement (4, 6, 7) relativ zur Herstellungsform (1) beweglich ist.

10. Herstellungsform nach Anspruch 7, 8 oder 9,
**dadurch gekennzeichnet, dass** das erste Heizmittel in Richtung der Erdanziehungskraft unterhalb der Auflagefläche (3) angeordnet ist und dass das wenigstens eine weitere Heizmittel (4, 6, 7) beabstandet von und oberhalb der Auflagefläche (3) angeordnet ist.

11. Herstellungsform nach Anspruch 7,
**gekennzeichnet durch** eine Zufuhreinrichtung für Warmluft in den Luftkanal (6).

12. Herstellungsform nach einem der Ansprüche 7 bis 11,
**gekennzeichnet durch** ein Regelsystem, das bei Unter- bzw. Überschreiten eines Prozesstemperatursollwertes um mehr als ± 20° C; vorzugsweise um mehr als ± 10° C, besonders bevorzugt um mehr als ± 5° C das erste und/oder das wenigstens eine weitere Heizmittel (4, 6, 7) ansteuert und dessen Wärmeabgabe erhöht bzw. verringert.

## Claims

1. Method for producing a fibre-reinforced component of a rotor blade of a wind turbine, wherein
at least one fibre-containing semi-finished product (2) is placed onto a contact surface (3) of a production mould (1) for the component to be produced,
the fibre-containing semi-finished product (2) is soaked with resin or has already been soaked with resin at least in some areas,
heat for curing is supplied to the area of the fibre-containing semi-finished product (2) that is soaked with resin, by means of
at least one first heating means arranged on a side of the contact surface (3) facing away from the resin-soaked fibre-containing semi-finished product (2),
**characterised in that** heat for curing is supplied to the area of the fibre-containing semi-finished product (2) that is soaked with resin from at least two opposite sides, at least one further heating means (4, 6, 7) is arranged along the contact surface (3) and **in that** the contact surface (3) is arranged between the first heating means and the at least one further heating means (4, 6, 7), and
the at least one further heating means is designed as a heating cover (4) which is placed onto the side, facing away from the first heating means, of the fibre-containing semi-finished product (2) infused with the resin system, and the contact surface (3) and the at least one heating cover (4) together substantially completely enclose the resin-soaked area of the fibre-containing semi-finished product (2).

2. Method according to claim 1, **characterised in that** a dry fibre-containing semi-finished product (2) is laid onto the contact surface (3), the overlaid dry fibre-containing semi-finished product (2) is then infused with a resin system.

3. Method according to claim 1 or 2, **characterised in that** the resin-soaked fibre-containing semi-finished product (2) is heated in the entire area to a substantially constant process temperature by the supply of heat.

4. Method according to claim 3, **characterised in that** the process temperature over the entire area fluctuates about a desired process temperature by no more than ± 20° C, preferably by no more than ± 10 °C, particularly preferably by no more than ± 5 °C.

5. Method according to one of the preceding claims, **characterised in that** during the curing the resin system is heated to a process temperature between at least 60 °C and at most 140 °C and a curing duration is predetermined and the resin system in the entire area is heated to the process temperature during the entire curing duration.

6. Method according to one of the preceding claims, **characterised in that** a resin component of the resin system is selected from the group of epoxy resins or polyester resins.

7. Production mould for carrying out a method for production of a fibre-reinforced component of a rotor blade of a wind turbine with a contact surface (3) for a resin-soaked fibre-containing semi-finished product (2) and at least one first heating means arranged on a side of the contact surface (3) facing away from the resin-soaked fibre-containing semi-finished product (2), **characterised by** at least one further heating means (4, 6, 7) which is arranged along the contact surface (3) and in that the contact surface (3) is arranged between the first heating means and the at least one further heating means (4, 6, 7), and the at least one further heating means is formed as a heating cover (4) which can be placed onto the side, facing away from the first heating means, of the fibre-containing semi-finished product (2) infused with the resin system, and in that the contact surface (3) and the at least one heating cover (4) together substantially completely enclose the resin-soaked region of the fibre-containing semi-finished product (2).

8. Production mould according to claim 7, **characterised by** an infusion device with a resin supply line for infusion of the fibre-containing semi-finished product (2) with a resin system for production of the resin-soaked fibre-containing semi-finished product (2).

9. Production mould according to claim 7 or 8, **characterised in that** the first heating element is provided in a stable position with respect to the production mould (1) and the at least one further heating element (4, 6, 7) is movable relative to the production mould (1).

10. Production mould according to claim 7, 8 or 9, **characterised in that** the first heating means is arranged in the direction of the force of gravity below the contact surface (3) and that the at least one further heating means (4, 6, 7) is arranged spaced apart from and above the contact surface (3).

11. Production mould according to claim 7, **characterised by** a supply device for hot air into the air channel (6).

12. Production mould according to one of claims 7 to 11, **characterised by** a control system, which controls the first and/or the at least one further heating means (4, 6, 7) and increases or reduces the heat emission thereof if the process temperature falls below or exceeds a process temperature desired value by more than ± 20 °C, preferably by more than ± 10 °C, particularly preferably by more than ± 5 °C.

## Revendications

1. Procédé pour la fabrication d'un composant renforcé par des fibres d'une pale de rotor d'une éolienne,
cependant qu'au moins un produit semi-fini contenant des fibres (2) est posé sur une surface d'appui (3) d'un moule de fabrication (1) pour le composant devant être fabriqué,
le produit semi-fini contenant des fibres (2) est imprégné au moins par endroits avec de la résine ou est déjà imprégné de résine,
de la chaleur est amenée à la zone imprégnée de résine du produit semi-fini contenant des fibres (2) pour durcir
au moyen d'au moins un premier moyen de chauffage placé sur un côté de la surface d'appui (3) qui est opposé au produit semi-fini contenant des fibres imprégné de résine (2),
**caractérisé en ce que** de la chaleur est amenée à la zone imprégnée de résine du produit semi-fini contenant des fibres (2) par au moins deux côtés en face l'un de l'autre pour durcir, qu'au moins un autre moyen de chauffage (4, 6, 7) est placé le long de la surface d'appui (3) et **en ce que** la surface d'appui (3) est placée entre le premier moyen de chauffage et l'autre moyen de chauffage qui existe au moins (4, 6, 7) et
l'autre moyen de chauffage qui existe au moins est configuré comme une couverture chauffante (4) qui est appliquée sur le côté du produit semi-fini qui contient des fibres, infusé avec le système de résine (2), qui est opposé au premier moyen de chauffage et que la surface d'appui (3) et la couverture chauffante qui existe au moins (4) entourent ensemble sensiblement entièrement la zone imprégnée de résine du produit semi-fini qui contient des fibres (2).

2. Procédé selon la revendication 1, **caractérisé en ce qu'**un produit semi-fini sec qui contient des fibres (2) est posé sur la surface d'appui (3), le produit semi-fini sec qui contient des fibres qui est posé (2) est ensuite infusé avec un système de résine.

3. Procédé selon la revendication 1 ou 2, **caractérisé en ce que** le produit semi-fini qui contient des fibres, imprégné de résine (2), est chauffé à une température de processus sensiblement constante par l'apport de chaleur dans toute la zone.

4. Procédé selon la revendication 3, **caractérisé en ce que** la température de processus ne fluctue pas sur toute la zone de plus de ± 20°C, de préférence pas de plus de ± 10°C, de manière particulièrement préférée pas de plus de ± 5°C autour d'une température nominale de processus.

5. Procédé selon l'une des revendications précédentes, **caractérisé en ce que** le système de résine est chauffé, pendant le durcissement, à une température de processus entre au moins 60°C et au plus 140°C et une durée de durcissement est prédéfinie et le système de résine est chauffé à la température de processus dans toute la zone pendant toute la durée de durcissement.

6. Procédé selon l'une des revendications précédentes, **caractérisé en ce qu'**une composante de résine du système de résine est sélectionnée dans le groupe des résines époxy ou des résines polyester.

7. Moule de fabrication pour exécuter un procédé pour la fabrication d'un composant renforcé par des fibres d'une pale de rotor d'une éolienne avec une surface d'appui (3) pour un produit semi-fini qui contient des fibres, imprégné de résine (2) et au moins un premier moyen de chauffage placé sur un côté de la surface d'appui (3) qui est opposé au produit semi-fini contenant des fibres, imprégné de résine (2), **caractérisé par** au moins un autre moyen de chauffage (4, 6, 7) qui est placé le long de la surface d'appui (3) et en ce que la surface d'appui (3) est placée entre le premier moyen de chauffage et l'autre moyen de chauffage qui existe au moins (4, 6, 7) et l'autre moyen de chauffage qui existe au moins est configuré comme une couverture chauffante (4) qui peut être appliquée sur le côté du produit semi-fini qui contient des fibres, infusé avec le système de résine (2), qui est opposé au premier moyen de chauffage et en ce que la surface d'appui (3) et la couverture chauffante qui existe au moins (4) entourent ensemble sensiblement entièrement la zone imprégnée de résine du produit semi-fini qui contient des fibres (2).

8. Moule de fabrication selon la revendication 7, **caractérisé par** un dispositif d'infusion avec une conduite d'alimentation en résine pour l'infusion du produit semi-fini qui contient des fibres (2) avec un système de résine pour la fabrication du produit semi-fini qui contient des fibres, imprégné de résine (2).

9. Moule de fabrication selon la revendication 7 ou 8, **caractérisé en ce que** le premier élément de chauffage est prévu de position stable par rapport au moule de fabrication (1) et l'autre élément de chauffage qui existe au moins (4, 6, 7) est mobile relatif par rapport au moule de fabrication (1).

10. Moule de fabrication selon la revendication 7, 8 ou 9, **caractérisé en ce que** le premier moyen de chauffage est placé en direction de la force de gravité au-dessous de la surface d'appui (3) et que l'autre moyen de chauffage qui existe au moins (4, 6, 7) est placé espacé de et au-dessus de la surface d'appui (3).

11. Moule de fabrication selon la revendication 7, **caractérisé par** un dispositif d'alimentation d'air chaud dans le canal d'air (6).

12. Moule de fabrication selon l'une des revendications 7 à 11, **caractérisé par** un système de régulation qui, lors du dépassement par le bas et/ou par le haut d'une valeur de température nominale de processus de plus de ± 20°C, de préférence de plus de ± 10°C, de manière particulièrement préférée de plus de ± 5°C, commande le premier et/ou l'autre moyen de chauffage qui existe au moins (4, 6, 7) et augmente et/ou diminue son dégagement de chaleur.
